# FASCICULE DE BREVET EUROPEEN

(11) **EP 2 704 914 B1**
(45) Date de publication et mention de la délivrance du brevet: **31.05.2017**
(21) Numéro de dépôt: 12722454.1
(22) Date de dépôt: 20.04.2012
(51) Int. Cl.: B60H 1/00

(54) **PROCEDE DE REGULATION MULTIZONE DE LA TEMPERATURE INTERIEURE DE L'HABITACLE D'UN VEHICULE AUTOMOBILE ET SYSTEME DE CLIMATISATION ASSOCIE**
VERFAHREN ZUR MEHRZONIGEN REGELUNG DER TEMPERATUR DES INNENRAUMES EINES KRAFTFAHRZEUGS UND ZUGEHÖRIGE KLIMAANLAGE
METHOD FOR MULTIZONE REGULATION OF THE TEMPERATURE OF THE INTERIOR OF A MOTOR VEHICLE AND ASSOCIATED AIR-CONDITIONING SYSTEM

(30) Priorité: 05.05.2011 FR 1153868
(43) Date de publication de la demande: 12.03.2014
(73) Titulaire: Renault S.A.S., 92100 Boulogne-Billancourt (FR)
(72) Inventeur: DENIAUD, Nicolas, F-78180 Montigny le Bretonneux (FR); RIPOLL, Christophe, F-78460 Chevreuse (FR)
(86) Numéro de dépôt international: PCT/FR2012/050873
(87) Numéro de publication internationale: WO 2013/001188

(56) Documents cités:
- DE-A1- 4 110 229
- DE-A1- 19 811 967
- US-A- 5 361 865
- US-A1- 2010 019 050

## Description

L'invention concerne la climatisation de l'habitacle d'un véhicule automobile, et plus particulièrement la régulation de la température d'air soufflé dans différentes zones de l'habitacle, telle que divulguée par US2010/0019050. L'habitacle d'un véhicule automobile représente un volume clos et réduit, soumis à un environnement changeant et parfois rigoureux dans lequel il est indispensable de renouveler régulièrement l'air et de réguler la température. La température intérieure de l'habitacle d'un véhicule automobile peut être régulée à partir de la température du flux d'air soufflé par un système de climatisation.

Un système de climatisation, également appelé en anglais « Heating Ventilation and Air-Conditioning system » (HVAC), comprend généralement au moins une soufflante couplée à des systèmes de chauffage et/ou de refroidissement de l'air. Le système de climatisation délivre l'air soufflé dans l'habitacle du véhicule automobile via des conduits d'air couplés à des volets de mixage. Les volets de mixage permettent de délivrer l'air soufflé à différentes zones de l'habitacle. De plus, ils peuvent être pilotés de manière à délivrer une température ou une quantité d'air soufflé différente selon les zones de l'habitacle.

Dans l'habitacle d'un véhicule automobile, la température peut varier d'une zone à une autre, par exemple entre le compartiment avant et le compartiment arrière, voire même entre la place du conducteur et la place du passager. En effet, selon les conditions extérieures, en été par exemple, et les matériaux utilisés dans l'habitacle du véhicule automobile, les éléments de l'habitacle du véhicule peuvent avoir emmagasiné de l'énergie calorifique.

Le flux d'énergie rayonnante solaire ainsi que les autres flux d'énergies thermiques transmis dans l'habitacle (par conduction et par convection) sont absorbés par l'ensemble des matières (sièges, habillage, planche de bord, etc.) se trouvant dans l'habitacle. Les objets et les surfaces d'échange internes absorbent de la chaleur et s'échauffent. A leur tour, ces corps rayonnent une certaine quantité de chaleur avec des longueurs d'onde supérieure à 5 µm, c'est-à-dire situées principalement dans l'infrarouge lointain. Or les vitrages, même clairs, se comportent comme un milieu opaque aux rayonnements ayant une longueur d'onde supérieure à 5 µm. La chaleur secondaire ainsi générée s'accumule donc, « piégée » à l'intérieur de l'habitacle.

L'effet de serre qui se produit alors peut être avantageux en hiver mais défavorable en été. En été, l'avant de la voiture peut être plus chaud que l'arrière, le tableau de bord en matière plastique rigide rayonnant plus de chaleur que les fauteuils en tissu synthétique ou autre couvrant la majorité de la partie arrière, et la partie avant ayant généralement plus de zones vitrées laissant le rayonnement solaire entrer. Par conséquent pour climatiser rapidement et efficacement tout l'intérieur de l'habitacle du véhicule automobile, le système de climatisation doit délivrer plus d'air soufflé frais, ou bien de l'air soufflé plus frais, à l'avant qu'à l'arrière de l'habitable.

Les systèmes de climatisation comprennent des moyens de régulation connus permettant de réguler la température de l'air soufflé dans plusieurs zones de l'habitacle. Les moyens de régulation utilisent généralement un capteur de température intérieure et un estimateur de température de confort ressentie par le conducteur. L'estimateur a pour but d'établir une température de confort ressentie par le conducteur à partir d'une correction de la température intérieure mesurée par le capteur. Les moyens de régulation peuvent ainsi réaliser une régulation par rapport à la température de confort ressentie par le conducteur et la consigne de température choisie par le conducteur.

Cette température de confort est ainsi utilisée dans une boucle d'asservissement de la température de confort agissant sur la commande du volet de mixage.

Pour cela, dans le cas où l'habitacle comprend un système de climatisation ayant un seul volet de mixage, la différence entre la consigne de température de confort et la température de confort mesurée est calculée, et la position du volet de mixage est déterminée par un régulateur, par exemple, de type PID et appliquée afin d'annuler la différence de température calculée.

Dans le cas où plusieurs volets de mixage sont utilisés pour plusieurs zones de l'habitacle, la boucle est appliquée autant de fois qu'il y a de volets. Ainsi, est pris en compte, pour chaque zone, un pilotage de volet de mixage associé à un estimateur de la température de la zone et une consigne de température de confort pour la zone. Cependant, ce type de procédé implique une mise au point compliquée nécessitant une soufflante par zone. De plus, une boucle d'asservissement étant nécessaire par zone, les coûts sont multipliés en termes de taille de codage et de moyens de réalisation.

Pour réduire la taille de codage d'un tel procédé dans le cadre d'une climatisation multizone, il est possible de réguler par rapport à une température de confort moyenne, c'est-à-dire par rapport à une moyenne des températures dans les zones. Le pilotage du volet de mixage de chaque zone est alors réalisé en appliquant un offset distinct pour chaque zone à la température de confort moyenne. Cependant, la précision de régulation de température est moins bonne que dans le cas précédent. De plus, tout changement de consigne de température de confort sur une zone induit une évolution sur les autres zones.

L'invention propose de pallier les inconvénients mentionnés en proposant des moyens de régulation d'un système de climatisation ayant une bonne précision de régulation et une taille de codage réduite.

Selon un aspect, il est proposé, dans un mode de réalisation, un système de climatisation de l'habitacle d'un véhicule automobile, comprenant au moins une soufflante pour entraîner un flux d'air chaud ou froid dans plusieurs zones distinctes de l'habitacle, des éléments de répartition du flux d'air dans lesdites zones, et des moyens de régulation de la température d'air dans chacune desdites zones, les moyens de régulation comportant une sonde de température apte à mesurer une température intérieure de l'habitacle, des moyens d'estimation d'une température de confort ressentie par le conducteur, des moyens utilisateur permettant à l'utilisateur d'émettre une consigne de température de confort.

Selon une caractéristique générale, les moyens de régulation comprennent un régulateur de répartition du flux d'air recevant en entrée la différence entre la consigne de température de confort et l'estimation de la température de confort et capable de délivrer en sortie un signal de commande pour l'un des éléments de répartition du flux d'air dans une première zone, et des moyens de détermination des signaux de commande pour les éléments de répartition du flux d'air dans les zones distinctes de ladite première zone à partir du signal de commande de l'élément de répartition du flux d'air dans ladite première zone.

Les éléments de répartition du flux d'air dans les différentes zones de l'habitacle peuvent être, par exemple, des volets de conduits d'air ou bien des volets de mixage ou des vannes de sortie de soufflante. Dans le cas de volets de conduits d'air, la position d'ouverture du volet sera commandée afin de réguler la quantité d'air délivré dans la zone associée de l'habitacle. Dans le cas de volets de mixage, la position d'ouverture des volets sera commandée afin de réguler la température et la quantité d'air soufflé dans les zones de l'habitacle, les volets de mixage étant des volets à la sortie de conduits d'air frais, d'une part, et d'air chaud, d'autre part, permettant de mélanger les deux flux d'air frais et chaud dans un conduit d'air destiné à une zone de l'habitacle. Dans le cas de vannes de sortie de soufflantes, le degré d'ouverture des vannes est commandé pour réguler la température et la quantité d'air soufflé.

Avantageusement, les moyens de détermination peuvent comprendre une mémoire dans laquelle une valeur d'offset est mémorisée pour un élément de répartition du flux d'air dans une zone. Les valeurs d'offset peuvent être mémorisées sur un banc test d'usine.

De préférence, les moyens de régulation comprennent un soustracteur déterminant la différence entre la consigne de température de confort et l'estimation de la température de confort.

Les moyens de régulation comprennent de préférence un ensemble de détermination avec au moins des moyens de mesure des conditions de fonctionnement des éléments de répartition du flux d'air, comme la position des volets de mixage par exemple, des moyens de mesure de l'ensoleillement, des moyens de mesures de la température extérieure, des moyens de mesure de la vitesse du véhicule, des moyens de mesure de la température de l'air issu du circuit moteur, et/ou des moyens de mesure de la température de l'air issu du circuit de refroidissement d'air.

Selon un autre aspect, il est proposé, dans un mode de mise en oeuvre, un procédé de régulation de la température intérieure de l'habitacle d'un véhicule automobile, comprenant la mesure d'une température intérieure de l'habitacle, l'estimation d'une température de confort ressentie par le conducteur, la réception d'une consigne de température de confort et la régulation de la température d'air soufflé dans plusieurs zones distinctes de l'habitacle.

Selon une caractéristique générale, pour réguler la température d'air soufflé on détermine une commande de température d'air soufflé dans une première zone et des commandes de température d'air soufflé dans d'autres zones à partir de la commande de la température d'air soufflé de ladite première zone.

On détermine avantageusement les commandes de température d'air soufflé des autres zones en ajoutant une valeur d'offset distincte pour chaque zone à la commande de température d'air soufflé dans la première zone.

De préférence, on détermine ladite commande de température d'air soufflé dans la première zone à partir de la différence entre la consigne de température de confort et la température de confort estimée.

La température de confort ressentie par le conducteur est estimée, de préférence, à partir de la température intérieure mesurée et d'au moins un paramètre supplémentaire.

Le paramètre supplémentaire peut avantageusement comprendre les conditions de fonctionnement des éléments de répartition du flux d'air, l'ensoleillement extérieur, la température extérieure au véhicule automobile, la vitesse du véhicule automobile, la température de l'air issu du circuit moteur, et/ou la température de l'air issu du circuit de refroidissement d'air.

D'autres avantages et caractéristiques de l'invention apparaîtront à l'examen de la description détaillée de modes de mise en oeuvre et de modes de réalisation, nullement limitatifs, et des dessins annexés, sur lesquels :
- la figure 1 présente de manière schématique un exemple de système de climatisation d'un véhicule automobile selon un mode de réalisation ;
- la figure 2 représente de manière schématique des moyens de régulation du système de climatisation de la figure 1 ;
- la figure 3 illustre un exemple d'étapes de procédé de régulation de la température intérieure de l'habitacle d'un véhicule automobile, selon un mode de mise en oeuvre ;
- la figure 4 représente des courbes d'évolution de la température dans trois zones de l'habitacle d'un véhicule automobile comprenant un système de climatisation selon un mode de réalisation de l'invention.

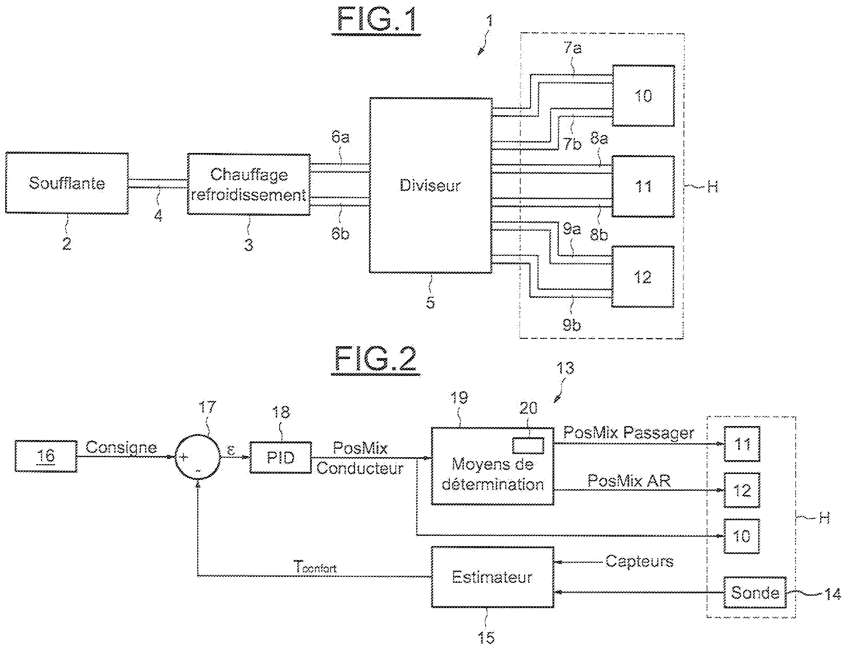

Sur la figure 1 est représenté schématiquement un système de climatisation 1 d'un véhicule automobile selon un mode de réalisation.

Le système de climatisation 1 comprend au moins une soufflante 2 permettant de générer un flux d'air vers des moyens 3 de chauffage et/ou de refroidissement couplés à la soufflante 1 par un conduit primaire 4. Le système de climatisation 1 comprend également des moyens 5 de division du flux d'air, couplés aux moyens 3 de chauffage et/ou refroidissement par un conduit secondaire d'air frais 6a et un conduit secondaire d'air chaud 6b. Les moyens 5 de division permettent de séparer les flux secondaires d'air chaud et frais des conduits secondaires 6a et 6b, en plusieurs flux tertiaires d'air chaud et frais circulant dans des conduits d'air frais 7a, 8a et 9a, respectivement associés à des conduits tertiaires d'air chaud 9a, 9b et 9c. Le système de climatisation 1 comprend autant de paires de conduits tertiaires d'air chaud et frais 7a et 7b, 8a et 8b, 9a et 9b qu'il y a de zones à climatiser dans l'habitacle du véhicule automobile.

Chaque paire de conduits tertiaires d'air chaud et frais 7a et 7b, 8a et 8b, 9a et 9b est respectivement couplée à un volet de mixage 10, 11 et 12. Un volet de mixage 10 à 12 permet délivrer de l'air soufflé dans une zone de l'habitacle tout en régulant la température de l'air soufflé en faisant varier la proportion d'air frais par rapport à l'air chaud. Pour réguler la température de l'air soufflé au travers d'un volet de mixage 10 à 12, chaque volet de mixage 10 à 12 est couplé à des moyens de régulation 13 de la température.

Sur la figure 2 sont représentés de manière schématique des moyens de régulation 13 du système de climatisation 1 de la figure 1.

Les moyens de régulation 13 sont capables de réguler une température de confort, *T_{confort},* ressentie par l'utilisateur, par exemple le conducteur, dans l'habitacle H du véhicule automobile. Ils comprennent une sonde de température 14 apte à mesurer une température intérieure de l'habitacle H. La sonde de température 14 peut, par exemple, être montée sur le rétroviseur intérieur du véhicule automobile.

Les moyens de régulation 13 comprennent aussi un estimateur 15 de la température de confort, *T_{confort},* ressentie par l'utilisateur et une commande 16 permettant à l'utilisateur d'émettre une consigne de température de confort, *Consigne.* La commande 16 et l'estimateur 15 sont couplés en entrée d'un soustracteur 17 dont la sortie est couplée à un régulateur 18.

Le soustracteur 17 calcule la différence ε entre la consigne de température de confort, *Consigne,* souhaitée par l'utilisateur et la température de confort ressentie par l'utilisateur, *T_{confort},* estimée par l'estimateur 15. La différence ε ainsi calculée par le soustracteur 17 est délivrée au régulateur 18, par exemple de type proportionnel intégral dérivé. Le régulateur 18 est configuré de manière à déduire de la différence ε, la position du volet de mixage conducteur 10. Le régulateur 18 délivre ainsi en sortie un signal de commande *PosMixConducteur* de la position du volet de mixage conducteur 10. Ce signal de commande *PosMixConducteur* est délivré, d'une part, au volet de mixage du conducteur 10, et, d'autre part, à des moyens de détermination 19 des signaux de commande du volet de mixage passager 11 et du volet de mixage arrière 12.

Les moyens de détermination 19, compris dans les moyens de régulation 13, comportent une mémoire 20 dans laquelle sont stockées des valeurs d'offset à appliquer au signal de commande de la position du volet de mixage conducteur 10 pour obtenir le signal de commande de la position du volet de mixage passager 11 et le signal de commande du volet de mixage arrière 12. A chaque volet de mixage distinct est associée une valeur d'offset. Les moyens de détermination 19 délivrent alors en sortie un signal de commande *PosMixPassager* de la position du volet de mixage passager au volet de mixage passager 11 et un signal de commande *PosMixAR* de la position du volet de mixage arrière au volet de mixage arrière 12.

Dans le cas où des consignes de température peuvent être émises pour chaque zone, la valeur d'offset de chaque zone peut être variable et dépendre de la consigne de température de la zone. Par exemple, si le passager émet une consigne de température différente de celle du conducteur, la valeur d'offset des moyens de détermination 19 est modifiée pour que le signal de commande *PosMixPassager* de la position du volet de mixage passager soit ajusté à la consigne de température de la zone passager.

Par ailleurs, pour déterminer la température de confort, *T_{confort},* ressentie par l'utilisateur, l'estimateur 15 reçoit en entrée, en plus de la température intérieure mesurée par la sonde de température 14 et des valeurs de paramètres supplémentaires issues, par exemple, de moyens de mesure de la position de chaque volet de mixage, de capteurs solaires permettant de mesurer l'ensoleillement extérieur sur le véhicule automobile, d'un capteur de température extérieure, d'un capteur de vitesse du véhicule, d'une sonde de température de l'air issu du circuit moteur, et/ou d'une sonde de température de l'air issu du circuit de refroidissement d'air. L'invention englobe ainsi différents modes de réalisation selon le nombre et la nature de ces paramètres supplémentaires.

Les valeurs de ces différents paramètres permettent à l'estimateur 15 d'affiner la correction de la température intérieure mesurée par la sonde de température 14 pour estimer la température de confort, *T_{confort},* ressentie par l'utilisateur.

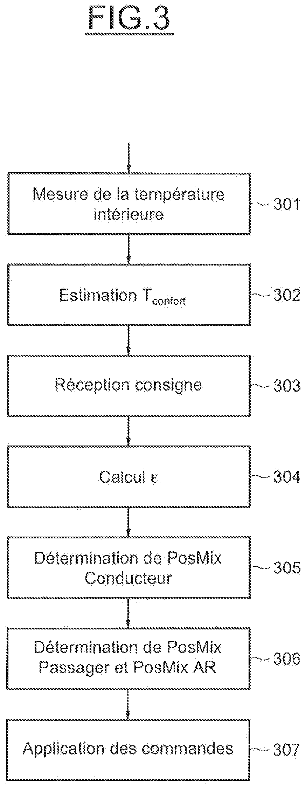

La figure 3 illustre un exemple d'étapes d'un procédé de régulation de la température intérieure de l'habitacle H d'un véhicule automobile, selon un mode de mise en oeuvre.

Dans une première étape 301, on mesure la température intérieure de l'habitacle H à l'aide de la sonde de température 14 située, par exemple, sur le rétroviseur intérieur du véhicule automobile. La sonde de température 14 délivre alors la mesure à l'estimateur 15 qui reçoit également en entrée des valeurs de paramètres supplémentaires tels que la position des volets de mixage, l'ensoleillement extérieur, la température extérieure au véhicule automobile, la vitesse du véhicule automobile, la température de l'air issu du circuit moteur, et/ou la température de l'air issu du circuit de refroidissement d'air.

Dans une étape suivante 302, on estime la température de confort, *T_{confort},* ressentie par l'utilisateur à partir de la température intérieure mesurée et des valeurs des paramètres supplémentaires mentionnés ci-dessus.

Dans une étape suivante 303, on reçoit une consigne de température de confort, *Consigne,* choisie par l'utilisateur, puis on calcule, à l'étape 304, la différence ε entre la consigne de température de confort, *Consigne,* et la température de confort, *T_{confort},* estimée.

Dans une étape 305, on détermine un signal de commande *PosMixConducteur* de la position du volet de mixage conducteur 10 à partir de la différence ε.

Puis, dans une étape 306, on détermine un signal de commande *PosMixPassager* de la position du volet de mixage passager en appliquant une première valeur d'offset au signal de commande *PosMixConducteur* de la position du volet de mixage conducteur 10 et un signal de commande *PosMixAR* du volet de mixage arrière 12 en appliquant une valeur d'offset au signal de commande de la position *PosMixConducteur* du volet de mixage conducteur 10.

Enfin dans une étape 307, on applique les signaux de commandes *PosMixConducteur, PosMixPassager, PosMixAR* respectivement au volet de mixage conducteur 10, au volet de mixage passager 11, et au volet de mixage arrière 12.

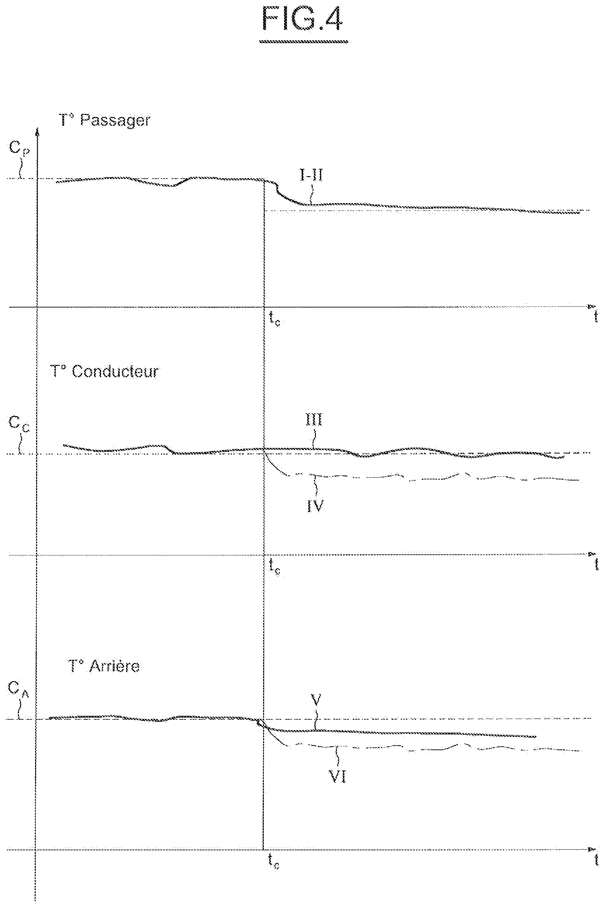

Sur la figure 4 sont représentés des courbes d'évolution de la température dans trois zones de l'habitacle d'un véhicule automobile comprenant un système de climatisation selon un mode de réalisation de l'invention et selon un mode de l'état de l'art.

L'évolution est représentée pour un système de climatisation de l'habitacle divisé, à titre d'exemple, en trois zones de régulation : une zone conducteur, une zone passager, et une zone arrière. A chaque zone est associé un volet de mixage.

Pour chaque zone, la consigne de température *C_{P}* (pour la zone passager), *C_{C}* (pour la zone conducteur), *C_{A}* (pour la zone arrière) est représentée en pointillé.

De plus, pour chaque zone également, deux courbes d'évolution de la température sont représentées en fonction du temps t. Une première courbe I, III, V en trait plein représentative de la température pour un système de climatisation selon l'invention. Une seconde courbe II, IV, VI en trait mixte représentative de la température pour un système de climatisation dont la régulation est réalisée à partir d'une température moyenne.

Sur ces courbes de températures, un changement de consigne de température de confort de la zone passager a été imposé à un instant t_{c}. La courbe I en trait plein et la courbe II en trait mixte représentatives de la température de la zone passager sont confondues, étant donné que le changement de consigne est réalisé sur ladite zone arrière.

On peut voir sur la courbe III qu'avec le procédé de régulation utilisé par les moyens de régulation du système de climatisation de l'invention, la température de la zone conducteur n'est pas modifiée tandis qu'elle est fortement modifiée avec un procédé de régulation utilisant la température moyenne comme illustré sur la courbe IV. La température de la zone arrière est légèrement modifiée pour une régulation selon l'invention comme illustré sur la courbe V, alors qu'elle est un peu plus fortement modifiée pour une régulation utilisant la température moyenne comme illustré sur la courbe VI.

Le procédé de régulation du système de climatisation selon l'invention permet ainsi d'obtenir une régulation de la température de confort à l'intérieur de l'habitacle d'un véhicule automobile avec une bonne précision de régulation, une précision même meilleure qu'une régulation réalisée par rapport à une valeur moyenne de température. Le procédé de régulation est mis en oeuvre à l'aide de moyens de régulation réduits et nécessitant une taille de codage réduite par rapport à une régulation utilisant une boucle de régulation par zone de l'habitacle.

## Revendications

1. Système de climatisation (1) de l'habitacle (H) d'un véhicule automobile, comprenant au moins une soufflante (2) pour entraîner un flux d'air chaud ou froid dans plusieurs zones distinctes de l'habitacle (H), des éléments (10, 11, 12) de répartition du flux d'air dans lesdites zones, et des moyens de régulation (13) de la température d'air dans chacune desdites zones, les moyens de régulation (13) comportant une sonde de température (14) apte à mesurer une température intérieure de l'habitacle (H), des moyens d'estimation (15) d'une température de confort (T_{confort}) ressentie par le conducteur, des moyens utilisateur (16) permettant à l'utilisateur d'émettre une consigne (Consigne) de température de confort, les moyens de régulation (13) comprenant un régulateur (18) de répartition du flux d'air recevant en entrée la différence (ε) entre la consigne (Consigne) de température de confort et l'estimation de la température de confort (T_{confort}) et **caractérisée en ce que** le régulateur (18) est capable de délivrer en sortie un signal de commande (PosMixConducteur) pour l'un des éléments (10) de répartition du flux d'air dans une première zone, et des moyens de détermination (19) des signaux de commande (PosMixPassager, PosMixAR) pour les éléments (11, 12) de répartition du flux d'air dans les zones distinctes de ladite première zone à partir du signal de commande (PosMixConducteur) de l'élément (10) de répartition du flux d'air dans ladite première zone.

2. Système selon la revendication 1, dans lequel les moyens de détermination (19) comprennent une mémoire (20) dans laquelle une valeur d'offset est mémorisée pour un élément (11, 12) de répartition du flux d'air dans une zone.

3. Système selon l'une des revendications 1 ou 2, dans lequel les moyens de régulation (13) comprennent un soustracteur (17) déterminant la différence (ε) entre la consigne (Consigne) de température de confort et l'estimation de la température de confort (T_{confort}).

4. Système selon l'une des revendications 1 à 3, dans lequel les moyens de régulation (13) comprennent un ensemble de détermination avec au moins des moyens de mesure des conditions de fonctionnement des éléments de répartition du flux d'air, des moyens de mesure de l'ensoleillement, des moyens de mesures de la température extérieure, des moyens de mesure de la vitesse du véhicule, des moyens de mesure de la température de l'air issu du circuit moteur, et/ou des moyens de mesure de la température de l'air issu du circuit de refroidissement d'air.

5. Procédé de régulation de la température intérieure de l'habitacle (H) d'un véhicule automobile, comprenant la mesure d'une température intérieure de l'habitacle (H), l'estimation d'une température de confort (T_{confort}) ressentie par le conducteur, la réception d'une consigne (Consigne) de température de confort et la régulation de la température d'air soufflé dans plusieurs zones distinctes de l'habitacle, **caractérisé en ce que** pour réguler la température d'air soufflé, on détermine une commande (PosMixConducteur) de température d'air soufflé dans une première zone et des commandes (PosMixPassager, PosMixAR) de température d'air soufflé dans d'autres zones à partir de la commande (PosMixConducteur) de la température d'air soufflé de ladite première zone.

6. Procédé selon la revendication 5, dans lequel on détermine les commandes de température d'air soufflé des autres zones en ajoutant une valeur d'offset distincte pour chaque zone à la commande de température d'air soufflé dans la première zone.

7. Procédé selon l'une des revendications 5 ou 6, dans lequel on détermine ladite commande (PosMixConducteur) de température d'air soufflé dans la première zone à partir de la différence (ε) entre la consigne de température de confort (Consigne) et la température de confort (T_{confort}) estimée.

8. Procédé selon l'une des revendications 5 à 7, dans lequel la température de confort (T_{confort}) ressentie par le conducteur est estimée à partir de la température intérieure mesurée et d'au moins un paramètre supplémentaire.

9. Procédé selon la revendication 8, dans lequel le paramètre supplémentaire comprend les conditions de fonctionnement des éléments de répartition du flux, l'ensoleillement extérieur, la température extérieure au véhicule automobile, la vitesse du véhicule automobile, la température de l'air issu du circuit moteur, et/ou la température de l'air issu du circuit de refroidissement d'air.

## Patentansprüche

1. System zum Klimatisieren (1) des Innenraums (H) eines Kraftfahrzeugs, umfassend wenigstens ein Gebläse (2), um einen Strom heißer oder kalter Luft in mehrere unterschiedliche Zonen des Innenraums (H) zu führen, Elemente (10, 11, 12) zur Verteilung des Luftstroms in den Zonen und Mittel zum Regulieren (13) der Lufttemperatur in jeder der Zonen, wobei die Mittel zum Regulieren (13) einen Temperaturfühler (14) aufweisen, der imstande ist, eine Innentemperatur des Innenraums (H) zu messen, Mittel zum Schätzen (15) einer vom Lenker als behaglich empfundenen Temperatur (T_{behaglich}), Benutzermittel (16), die es dem Benutzer erlauben, einen Sollwert (Soll) für die Behaglichkeitstemperatur zu senden, wobei die Mittel zum Regulieren (13) einen Regler (18) der Verteilung des Luftstroms umfassen, der am Eingang die Differenz (ε) zwischen dem Sollwert (Soll) für die Behaglichkeitstemperatur und der Schätzung der Behaglichkeitstemperatur (T_{behaglich}) empfängt, und **dadurch gekennzeichnet, dass** der Regler (18) in der Lage ist, am Ausgang ein Steuersignal (PosMixLenker) für eines der Elemente (10) zur Verteilung des Luftstroms in einer ersten Zone zu liefern, und Mittel zum Bestimmen (19) der Steuersignale (PosMixPassagier, PosMixAR) für die Elemente (11, 12) zur Verteilung des Luftstroms in den Zonen, die sich von der ersten Zone unterscheiden, auf Basis des Steuersignals (PosMixLenker) des Elements (10) zur Verteilung des Luftstroms in der ersten Zone.

2. System nach Anspruch 1, wobei die Mittel zum Bestimmen (19) einen Speicher (20) umfassen, in dem ein Versatzwert für ein Element (11, 12) zur Verteilung des Luftstroms in einer Zone gespeichert ist.

3. System nach einem der Ansprüche 1 oder 2, wobei die Mittel zum Regulieren (13) einen Subtrahierer (17) umfassen, der die Differenz (ε) zwischen dem Sollwert (Soll) für die Behaglichkeitstemperatur und der Schätzung der Behaglichkeitstemperatur (T_{behaglich}) bestimmt.

4. System nach einem der Ansprüche 1 bis 3, wobei die Mittel zum Regulieren (13) eine Bestimmungseinheit mit wenigstens Mitteln zum Messen der Betriebsbedingungen der Elemente zur Verteilung des Luftstroms, Mitteln zum Messen der Sonneneinstrahlung, Mitteln zum Messen der Außentemperatur, Mitteln zum Messen der Geschwindigkeit des Fahrzeugs, Mitteln zum Messen der Temperatur der aus dem Motorkreislauf austretenden Luft und/oder Mitteln zum Messen der Temperatur der aus dem Luftkühlkreislauf austretenden Luft umfassen.

5. Verfahren zum Regulieren der Innentemperatur des Innenraums (H) eines Kraftfahrzeugs, umfassend das Messen einer Innentemperatur des Innenraums (H), das Schätzen einer vom Lenker als behaglich empfundenen Temperatur (T_{behaglich}), das Empfangen eines Sollwerts (Soll) für die Behaglichkeitstemperatur und das Regulieren der Temperatur der Blasluft in mehreren unterschiedlichen Zonen des Innenraums, **dadurch gekennzeichnet, dass** zum Regulieren der Temperatur der Blasluft ein Befehl (PosMixLenker) für die Temperatur der Blasluft in einer ersten Zone und Befehle (PosMixPassagier, PosMixAR) für die Temperatur der Blasluft in anderen Zonen auf Basis des Befehls (PosMixLenker) für die Temperatur der Blasluft der ersten Zone bestimmt werden.

6. Verfahren nach Anspruch 5, wobei die Befehle für die Temperatur der Blasluft der anderen Zonen bestimmt werden, indem ein unterschiedlicher Versatzwert für jede Zone zu dem Befehl für die Temperatur der Blasluft in der ersten Zone hinzugefügt wird.

7. Verfahren nach einem der Ansprüche 5 oder 6, wobei der Befehl (PosMixLenker) für die Temperatur der Blasluft in der ersten Zone auf Basis der Differenz (ε) zwischen dem Sollwert (Soll) für die Behaglichkeitstemperatur und der geschätzten Behaglichkeitstemperatur (T_{behaglich}) bestimmt wird.

8. Verfahren nach einem der Ansprüche 5 bis 7, wobei die vom Lenker als behaglich empfundene Temperatur (T_{behaglich}) auf Basis der gemessenen Innentemperatur und wenigstens eines zusätzlichen Parameters geschätzt wird.

9. Verfahren nach Anspruch 8, wobei der zusätzliche Parameter die Betriebsbedingungen der Elemente zur Verteilung des Luftstroms, die externe Sonneneinstrahlung, die Temperatur außerhalb des Kraftfahrzeugs, die Geschwindigkeit des Kraftfahrzeugs, die Temperatur der aus dem Motorkreislauf austretenden Luft und/oder die Temperatur der aus dem Luftkühlkreislauf austretenden Luft umfasst.

## Claims

1. Air-conditioning system (1) for the cabin (H) of a motor vehicle, comprising at least one blower (2) for entraining a hot or cold air flow in several distinct zones of the cabin (H), elements (10, 11, 12) for distributing the air flow in said zones, and means (13) for regulating the air temperature in each of said zones, the regulating means (13) comprising a temperature probe (14) able to measure an interior temperature of the cabin (H), means (15) for estimating a comfort temperature (T_{comfort}) experienced by the driver, and user means (16) allowing the user to issue a comfort temperature setpoint (Setpoint), the regulating means (13) comprising a regulator (18) for distributing the air flow receiving as input the difference (ε) between the comfort temperature setpoint (Setpoint) and the estimation of the comfort temperature (T_{comfort}) and **characterized in that** the regulator (18) is capable of delivering as output a control signal (PosMixDriver) for one of the elements (10) for distributing the air flow in a first zone, and means (19) for determining the control signals (PosMixPassenger, PosMixRE) for the elements (11, 12) for distributing the air flow in the zones distinct from said first zone on the basis of the control signal (PosMixDriver) for the element (10) for distributing the air flow in said first zone.

2. System according to Claim 1, in which the determining means (19) comprise a memory (20) in which an offset value is stored for an element (11, 12) for distributing the air flow in a zone.

3. System according to either of Claims 1 and 2, in which the regulating means (13) comprise a subtractor (17) determining the difference (ε) between the comfort temperature setpoint (Setpoint) and the estimation of the comfort temperature (T_{comfort}).

4. System according to one of Claims 1 to 3, in which the regulating means (13) comprise a determining assembly with at least means for measuring the operating conditions of the elements for distributing the air flow, means for measuring the sunshine, means for measuring the exterior temperature, means for measuring the speed of the vehicle, means for measuring the temperature of the air arising from the engine circuit, and/or means for measuring the temperature of the air arising from the air cooling circuit.

5. Method for regulating the interior temperature of the cabin (H) of a motor vehicle, comprising the measurement of an interior temperature of the cabin (H), the estimation of a comfort temperature (T_{comfort}) experienced by the driver, the reception of a comfort temperature setpoint (Setpoint) and the regulating of the temperature of air blown into several distinct zones of the cabin, **characterized in that** to regulate the temperature of blown air, a control (PosMixDriver) of temperature of air blown into a first zone and controls (PosMixPassenger, PosMixRE) of temperature of air blown into other zones are determined on the basis of the control (PosMixDriver) of the temperature of blown air of said first zone.

6. Method according to Claim 5, in which the controls of temperature of blown air of the other zones are determined by adding a distinct offset value for each zone to the control of temperature of air blown into the first zone.

7. Method according to either of Claims 5 and 6, in which said control (PosMixDriver) of temperature of air blown into the first zone is determined on the basis of the difference (ε) between the comfort temperature setpoint (Setpoint) and the estimated comfort temperature (T_{comfort}).

8. Method according to one of Claims 5 to 7, in which the comfort temperature (T_{comfort}) experienced by the driver is estimated on the basis of the measured interior temperature and of at least one additional parameter.

9. Method according to Claim 8, in which the additional parameter comprises the operating conditions of the elements for distributing the flow, the exterior sunshine, the temperature outside the motor vehicle, the speed of the motor vehicle, the temperature of the air arising from the engine circuit, and/or the temperature of the air arising from the air cooling circuit.
